Europäisches Patentamt

European Patent Office

Office européen des brevets

(19)

(11) **EP 0 707 083 B1**

(12) **EUROPÄISCHE PATENTSCHRIFT**

(45) Veröffentlichungstag und Bekanntmachung des Hinweises auf die Patenterteilung:
**09.05.2001 Patentblatt 2001/19**

(51) Int Cl.7: **C22B 7/00**, C22B 7/02, C22B 7/04, C21B 11/00

(21) Anmeldenummer: **95890180.3**

(22) Anmeldetag: **10.10.1995**

(54) **Verfahren zum Aufarbeiten von Müll oder von metalloxidhaltigen Müllverbrennungsrückständen sowie Vorrichtung zur Durchführung dieses Verfahrens**

Process for treating waste or metal oxide containing incinerator refuse, and device for carrying out this process

Procédé de retraitement de déchets ou de résidus d'incinération contenant un oxyde métallique, et dispositif de mise en oeuvre de ce procédé

(84) Benannte Vertragsstaaten:
**AT BE CH DE DK ES FR GB GR IE IT LI LU MC NL PT SE**
Benannte Erstreckungsstaaten:
**LT LV SI**

(30) Priorität: **10.10.1994 AT 191094**

(43) Veröffentlichungstag der Anmeldung:
**17.04.1996 Patentblatt 1996/16**

(73) Patentinhaber: **"HOLDERBANK" Financière Glarus AG**
**8750 Glarus (CH)**

(72) Erfinder: **Edlinger, Alfred, Dipl.-Ing.**
**CH-5400 Baden (CH)**

(74) Vertreter: **Haffner, Thomas M., Dr.**
**Patentanwalt**
**Schottengasse 3a**
**1014 Wien (AT)**

(56) Entgegenhaltungen:
| | |
|---|---|
| EP-A- 0 024 250 | DE-B- 2 304 369 |
| FR-A- 2 293 494 | FR-A- 2 457 904 |
| US-A- 3 682 623 | US-A- 4 110 107 |

- **PATENT ABSTRACTS OF JAPAN vol. 018 no. 668 (C-1289) ,16.Dezember 1994 & JP-A-06 264125 (NIPPON STEEL CORP) 20.September 1994,**
- **DATABASE WPI Week 7845 1978 Derwent Publications Ltd., London, GB; AN 78-81258A & JP-A-53 114 705 (SA LA METALLO-CHIMI) , 6.Oktober 1978**

EP 0 707 083 B1

**Beschreibung**

Die Erfindung bezieht sich auf ein Verfahren zum Aufarbeiten von Müll oder von metalloxidhaltigen Müllverbrennungsrückständen oder Schlachen, insbesondere von Altkatalysatoren, Autoshredderleichtfraktionen, Schrottmetallen, Galvanik-Rückständen und/oder Klärschlamm, bei welchem die getrockneten und vorgewärmten Feststoffe einem Schmelzoxidationsreaktor zugeführt werden sowie auf eine Vorrichtung zur Durchführung dieses Verfahrens.

Zur Entsorgung von Abfallgütern aller Art, wie beispielsweise Industrie-, Haus- und/oder Sondermüll, sowie bei der Autoentsorgung anfallende Müllfraktionen, sind unterschiedliche Verfahren bekannt geworden. Neben der pyrolytischen Trennung zum Abscheiden von flüchtigen oder verflüssigbaren organischen Komponenten, wie z.B. der DE 23 04 369 B zu entnehmen, sind unterschiedliche Ausbildungen von Einschmelzvergasungsreaktionen bekannt geworden. Verfahren dieser Art finden in der FR 75 35 789 A und der EP 0 024 250 A1 zum thermischen Zersetzen kohlenstoffreicher Stoffe, insbesondere Abfallstoffe Verwendung. In der DE 30 19 066 A1 wird ein Verfahren zur Wiedergewinnung von Eisen, Zink und Blei, die in Rückständen bei Hochofenprozessen enthalten sind, beschrieben. Eine Komplexreaktion in einem abgeschlossenen metallurgischen Behälter, die herkömmliche Kalzinationsreaktionen ersetzt, besteht hierbei in einer raschen Reduktion durch im Eisenbad enthaltene Kohle, einer selektiven Verflüchtigung reduzierten Zinks, einer Eisenschmelze und einer Ablagerung metallförmigen Bleies am Behältergrund, unter Anreicherung von Schwefel in einer Schlackenschicht. Bei den Schmelzvergasungen ist im besonderen die Verwendung von Schmelzoxidationsreaktoren bereits vorgeschlagen worden, bei welchen metallische Anteile weitestgehend zu Schlacken oxidiert werden, worauf in der Folge die erhaltenen Schlacken durch verschiedene Formen der Weiterbehandlung in wiederverwertbare Substanzen, wie beispielsweise Zementzuschlagstoffe oder Zementersatzstoffe umgesetzt wurden.

In der WO 96/10097 ist eine Vorrichtung beschrieben, bei welcher einem Schmelzoxidationsreaktor zwei weitere reduzierende Schmelzkammern nachgeschaltet sind, wobei in beiden nachgeschalteten Schmelzkammern Buntmetalle und Schwermetalle sowie Eisenlegierungen abgestochen werden.

Das erfindungsgemäße Verfahren der eingangs genannten Art zielt nun darauf ab, aus den eingangs genannten Rückständen siderophile Metalle, insbesondere Kupfer, Zinn und Nickel, sowie atmosphile Metalle, insbesondere Cadmium, Zink und Blei, gesondert auszutragen und ein buntmetallfreies Roheisen sowie eine weitestgehend eisenfreie synthetische Hochofenschlacke zu gewinnen, welche insbesondere mit erhöhtem Aluminiumoxidgehalt gewonnen werden kann und auf diese Weise hydraulische Eigenschaften aufweist, welche zu einer deutlichen Erhöhung der Frühfestigkeitswerte von daraus hergestellen Mischzementen führen kann. Zur Lösung dieser Aufgabe besteht das erfindungsgemäße Verfahren im wesentlichen darin, daß nach einer zumindest teilweisen Oxidation der Schmelze zu Schlacke unter Abscheidung eines Metallbades die Schlacke zweistufig reduziert wird, wobei in einer ersten Stufe mit Schrott oder durch Einblasen von $CO/CO_2$ eine Buntmetallreduktion unter Ausbildung eines Eisenbades, aus welchem Buntmetalle in Form von Rohbronze ausseigern, durchgeführt wird und in der zweiten Reduktionsstufe mit $CaCO_3$, $CaO$ und Kohlenstoff, sowie ggf. $O_2$, eine indirekte Eisenreduktion zur Verringerung des FeO-Gehaltes der Schlacke vorgenommen wird. Durch die erfindungsgemäß vorgeschlagene zweistufige Reduktion gelingt es, in einer ersten Reduktion lediglich siderophile Metalle, beispielsweise in Form einer Rohbronze, zu metallisieren, wohingegen Eisenoxide in der Schlacke verbleiben. Erst in der zweiten Reduktionsstufe soll eine indirekte Eisenreduktion zur Verringerung des FeO-Gehaltes der Schlacke vorgenommen werden, wobei erfindungsgemäß durch die Maßnahme, in der zweiten Reduktionsstufe unter Zusatz von Calziumkarbonat, Calziumoxid und Kohlenstoff sowie ggf. Sauerstoff zu arbeiten, eine Kalzinierungsreaktion vorgenommen wird, welche zu einer bedeutenden Verbesserung der Eigenschaften der Schlacke für die angestrebten Zwecke führt. Bei einer derartigen Kalzinierungsreaktion, bei welcher eine im wesentlichen schwermetallfreie Schlackenschmelze vorliegt, da ja zuvor Schwermetalle und siderophile Elemente bereits abgetrennt wurden, sind im wesentlichen folgende Reaktionen maßgeblich:

$$C + Fe \rightarrow Fe_3C$$

$$CaCO_3 \rightarrow CaO + CO_2$$

$$Fe_3C + CO_2 \rightarrow CO + 3\,Fe$$

$$CO_2 + C \rightarrow 2\,CO$$

$$C + 1/2\,O_2 \rightarrow CO$$

Das gebildete CO kann hierbei aus dem Eisenbad in die Schlacke diffundieren und vorhandenes Eisenoxid reduzieren. Die Schlackeneisenreduktion erfolgt allerdings hier nur bis zu einem Volumenanteil von etwa 15 Vol.% CO im $CO/CO_2$-Gasgemisch. Gemäß einer bevorzugten Weiterbildung des erfindungsgemäßen Verfahrens wird nun so vorgegangen, daß das in der zweiten Reduktionsstufe gebildete $CO/CO_2$-Gemisch zur Verringerung des Reduktionspotentiales mit

$O_2$ teilverbrannt wird und in die erste Reduktionsstufe zur Cu-Reduktion eingebracht wird. In dieser ersten Reduktionsstufe kann somit mit wesentlich verringertem Reduktionspotential, welches für eine weitere Reduktion von Eisen in der zweiten Reduktionsstufe nicht mehr ausreichen würde, eine Buntmetallreduktion unterstützt werden. Diese erste Reduktionsstufe wird über einem Eisenbad vorgenommen, wobei das Partialdruckverhältnis $C0 : C0_2$ nicht dazu ausreicht, bereits im Eisenbad-Reaktor, in welchem die erste Reduktion durchgeführt wird, auch Fe0 zu reduzieren. Immer dann, wenn der C0-Partialdruck für eine derartige Begrenzung zu hoch wäre, müßte eine zusätzliche Teilverbrennug mit Sauerstoff vorgenommen werden, um sicherzustellen, daß in der ersten Reduktionsstufe tatsächlich lediglich eine Buntmetallreduktion vorgenommen wird. Das Reduktionspotential des $C0/C0_2$-Gemisches muß daher quasi abgestumpft werden, damit im Eisenbad-Reaktor, in welchem die erste Reduktionsstufe durchgeführt wird, Fe0 aus der Schlacke nicht reduziert werden kann.

In der zweiten Reduktionsstufe, bei welcher neben der Schlacke gleichfalls wiederum ein Eisenbad vorliegt, in welches $CaC0_3$, Ca0 und Kohlenstoff eingebracht werden kann, frischt das Schlackeneisenoxid den Kohlenstoffanteil des Eisenbades durch direkte Reduktion. Die entsprechende Reaktionsgleichung im Eisenbad-Kalzinator kann hierbei wie folgt formuliert werden:

$$Fe_3C + (Fe0)\ Schlacke \rightarrow 4(Fe)\ Eisenbad + C0\uparrow$$

Dieser Frischprozeß wird durch entsprechende Turbulenz noch unterstützt, wobei mit Vorteil so vorgegangen wird, daß das $CaCO_3$, CaO und C sowie ggf. $O_2$ über eine Lanze in ein unter dem Schlackenbad befindliches Fe-Bad eingeblasen wird. Der im Eisenbad-Kalzinator gebildete Brandkalk (Ca0) ist leichter als das Eisenbad und in diesem nicht löslich und diffundiert in die saure Schlackenschmelze, die $Si0_2$ und $Al_20_3$ enthält. Hier erfolgt eine exotherme Reaktion mit dem silikatischen Anteil zu synthetischer Hochofenschlacke, wodurch eine wesentliche Verbesserung der Energiebilanz erzielt wird. Aufgrund von Müllverbrennungsrückständen ist hier mit einem hohen $Al_20_3$-Gehalt zu rechnen, welcher schließlich in der Folge zu dem gewünschten hohen Frühfestigkeitswert entsprechender Mischzemente nach einer Schlackengranulation führt. Die Beheizung des Eisenbad-Kalzinators kann erfindungsgemäß in einfacher Weise durch Frischen des im Eisenbad gelösten Kohlenstoffes zu C0 mit Sauerstoff erfolgen. Andere Beheizungsverfahren, wie beispielsweise induktive oder konduktive Beheizungen sind naturgemäß gleichfalls denkbar.

Mit Vorteil wird somit so vorgegangen, daß in der zweiten Reduktionsstufe Schlackeneisenoxid zum Frischen des Eisenbades verwendet wird, wobei vorzugsweise die Buntmetallverunreinigungen aus dem in die erste Reduktionsstufe in Form von Schrott eingebrachten Fe in der ersten Reduktionsstufe zur Gänze ausgeseigert werden. Somit kann das in die erste Reduktionsstufe eingebrachte Fe in der zweiten Reduktionsstufe ohne Buntmetallverunreinigungen rückgewonnen werden. Das ursprünglich in die erste Reduktionsstufe eingebrachte Schrotteisen wird in metallurgisch sauberer Form, insbesondere ohne Verunreinigungen durch Kupfer rückgewonnen, und auf diese Weise gleichzeitig entsprechend gereinigt. Normaler Weise kann mit Buntmetallen verunreinigtes Schrotteisen nur durch Zumischen von Hochofenroheisen auf ein gefordertes Qualitätsniveau gehoben werden. Müllschrotteisen ist in der Regel überhaupt unbrauchbar und wird meistens deponiert. Durch die erfindungsgemäße zweistufige Reduktion wird nun eine Möglichkeit geschaffen, in der ersten Reduktionsstufe auch derartiges bisher unbrauchbares Ausgangsmaterial wie Müllschrott entsprechend zu reinigen und in der Folge in ein wiederverwertbares Produkt, nämlich hochwertiges Roheisen, zu verwandeln. Gleichzeitig können die atmosphilen Mischmetalle und Bronzen abgetrennt werden, wodurch eine saubere Metallfraktionierung gelingt. In dem Eisenbadreaktor, in welchem die erste schonende Reduktionsstufe durchgeführt wird, gelingt es, eine flüssige Kupferlegierung auszuseigern, welche neben Kupfer weitere siderophile Schwermetalle wie Zinn und Nickel enthalten kann. Diese Kupferlegierung kann schließlich, wie es einer bevorzugten Weiterbildung des erfindungsgemäßen Verfahrens entspricht, in der Folge durch Repetieren veredelt werden, wofür die Rückführung in den Einschmelz-Oxidationsreaktor erfolgt. Das Oxidationspotential kann hier so eingestellt werden, daß der gesamte Eintrag bis und einschließlich des Eisens verbrannt wird, sodaß das edlere Kupfer nicht mitverbrannt wird.

In besonders vorteilhafter Weise wird das erfindungsgemäße Verfahren so durchgeführt, daß das Oxidationspotential im Einschmelz-Oxidationsreaktor so eingestellt wird, daß die Verbrennung bis zum Fe unter Ausschluß der edleren Metalle wie Cu geführt wird, wobei Cu als Schmelze abgezogen wird.

Die erfindungsgemäße Vorrichtung zur Durchführung des erfindungsgemäßen Verfahrens weist einen Einschmelz-Oxidationsreaktor auf, welchem ein Eisenbad-Reaktor und ein Eisenbad-Kalzinator nachgeschaltet sind, welche über Überströmkanäle für die Schlackenphase miteinander verbunden sind, wobei an den Eisenbad-Reaktor Mittel zur Aufgabe von Schrott und/oder zum Einblasen von $CO/CO_2$ und eine Austragsöffnung für den Austrag von Buntmetallen bzw. Buntmetallegierungen und an den Eisenbad-Kalzinator Mittel für den Eintrag von $CaCO_3$, CaO, Kohlenstoff sowie gegebenenfalls $O_2$, insbesondere eine Lanze, angeschlossen sind, wobei im Eisenbad-Kalzinator der FeO-Gehalt der Schlacke verringert wird und eine Abstichöffnung für Roheisen angeschlossen ist. Die Vorrichtung ist dadurch gekennzeichnet, daß an den Eisenbadreaktor eine mit einem Eisendeckel betriebene Seigerungskokille angeschlossen ist. Der Eisenbad-Reaktor dient hierbei der Durchführung der ersten Reduktionsstufe wohingegen der Eisenbad-Kalzinator die zweite Reduktionsstufe bildet. Der Einschmelz-Oxidationsreaktor kann hierbei einen Schwebeschmelz-schacht und/oder einen Gegenstromschachtofen umfassen, an welchem ein Staubeintrag sowie Mittel für den Eintrag von Brennstoff und gegebenenfalls Mittel für den Eintrag von Shreddermüll, angeschlossen sind, wobei vorzugsweise an den Schlackenaustrag des Eisenbad-Kalzinators eine Granuliervorrichtung, beispielsweise eine Dampfgranuliermühle angeschlossen ist. Der Gegenstromschachtofen ist hierbei aufgrund seiner Gegenstromvorwärmung des Möllers und aufgrund des Umstandes, daß Staub effizient zurückgehalten wird und daher die Aufgabe von Feststoffen erleichtert wird, von besonderem Vorteil. Insbesondere eine derartige Granuliervorrichtung, wie beispielsweise eine Dampfgranuliermühle, kann mit Vorteil mit Druckwasser betrieben werden, wofür notwendige Voraussetzung ist, daß der Reineisengehalt der Schlacke äußerst gering ist, um Knallgasexplosionen zu vermeiden. Eben diese hohe Reinheit wird durch die Verwendung eines Eisenbad-Kalzinators sichergestellt. An den Eisenbad-Reaktor kann ein Kamin für den Abzug von Metall, insbesondere zu Pb, Dampf und eine verschließbare Öffnung für die Schrottzugabe angeschlossen sein, wobei in einfacher Weise der Austrag für das Metallbad des Eisenbad-Reaktors mit einer induktiven Beheizung ausgestattet ist.

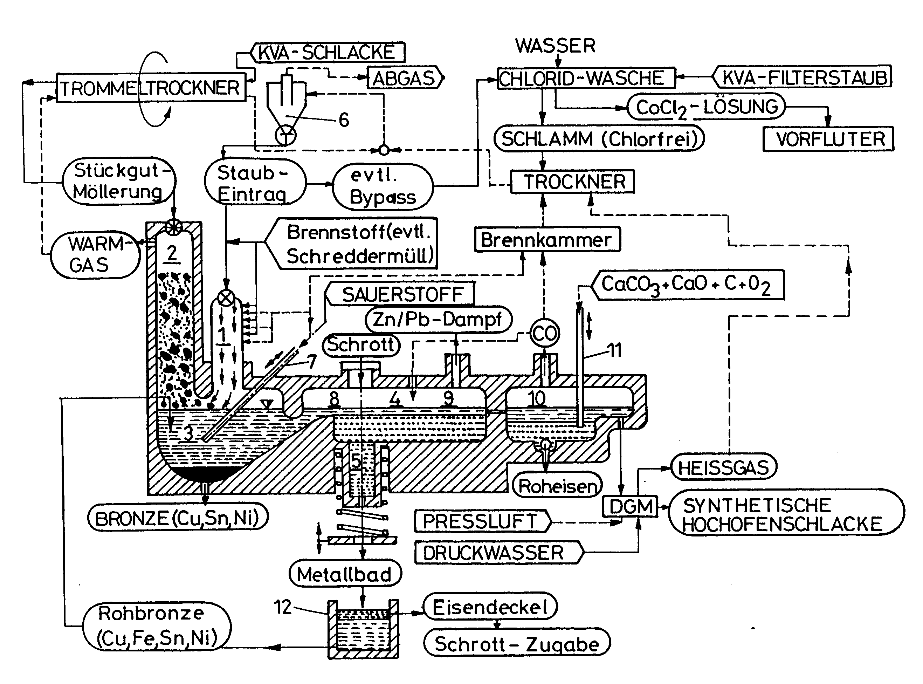

Die Erfindung wird nachfolgend anhand von Ausführungsbeispielen sowie anhand einer in der Zeichnung schematisch dargestellten Ausführung der erfindungsgemäßen Vorrichtung näher erläutert.

Beispiel 1:

Für eine Müllschlackenveredelung wurde eine wie folgt ermittelte Schlackenzusammensetzung gefunden:

| Ausgangs-Müllschlacke | |
|---|---|
| Komponente | Anteil (Gew.%) |
| Schrotteisen | 8 |
| Schrottaluminium | 2 |
| unverbranntes C | 2 |
| Mineralisches | 88 |

| Analyse Mineralisches | |
|---|---|
| Komponente | Anteil (%) |
| Glühverlust | 4 |
| $SiO_2$ | 47 |
| $Al_2O_3$ | 10 |

(fortgesetzt)

| Analyse Mineralisches | |
|---|---|
| Komponente | Anteil (%) |
| $Fe_2O_3$ | 6 |
| $CaO$ | 15 |
| $MgO$ | 3 |
| $SO_3$ | 1,6 |
| $K_2O$ | 1 |
| $Na_2O$ | 4 |
| $TiO_2$ | 1 |
| Cl | 0,5 |
| Ni | 0,01 |
| Cr | 0,05 |
| Sn | 0,02 |
| Cu | 1 |
| Pb | 0,25 |
| Zn | 0,4 |

Die Beheizung des Schwebeschmelz-Schachtes erfolgte mit Erdgas (Hu = 36 MJ/Nm$^3$). Pro Tonne Müllschlacke wurden 56 Nm$^3$ Erdgas (ca. 2 GJ/t Schlakke) benötigt.

Pro Tonne Schmelzschlacke wurden 190 KWh elektrische Warmhaltearbeit im Eisenbad-Reaktor benötigt.

Auch der Eisenbad-Kalzinator wurde induktiv warmgehalten, wozu 240 KWh/t elektrische Warmhaltearbeit benötigt wurden.

Der Schwermetallgehalt der erhaltenen synthetischen Hochofenschlacke bewegte sich unter der Nachweisgrenze der AAS (Atom-Absorptions-Analyse).

Der Alkaligehalt ($K_2O + Na_2O$) wurde durch die Zugabe von Kalkstein drastisch gesenkt und verdampft nach folgendem Mechanismus:

$$Na_2SiO_3 + CaO \rightarrow Na_2O\uparrow + CaSiO_3$$

Es wurden pro t Schlackenschmelze (eisenoxidfrei gerechnet) 250 k Kalkstein (CaCO3), (ensprechend 140 k CaO), gemahlen zugegeben. Gemäß dem gewünschten $CO/CO_2$-Partialdruckverhältnis wurde die Zugabe von $CaO/CaCO_3/C/O_2$ in das Eisenbad im Eisenbad-Kalzinator geregelt. Es ist sogar denkbar, das Eisenbad im Eisenbad-Kalzinator bis zur Stahlqualität zu frischen.

Nach der Eisenoxidreduktion und Kalkzugabe hat die erhaltene Schlacke folgende chemische Analyse:

| Komponente | Anteil (%) |
|---|---|
| $SiO_2$ | 48 |
| $Al_2O_3$ | 11 |

(fortgesetzt)

| Komponente | Anteil (%) |
| --- | --- |
| CaO | 31 |
| Mg0 | 5 |
| $K_2O$ | 1 |
| $Na_2O$ | 0,5 |
| $TiO_2$ | 3 |

Nachdem die Schlacke wassergranuliert wurde, konnten die folgenden Mineralphasen identifiziert werden:

Die Schlacke ist überwiegend glasig mit MELI-LITH- (Akermanit: $2\,CaO - MgO - 2\,SiO_2$) und DIOPSID- (CaO - MgO - $2\,SiO_2$) - Kristallphasen

Die Hydraulizitätsversuche (Hydraulischer Index nach Methode "Keil" durchgeführt) ergaben eine sehr gute Schlackenqualität (HI = 87 %). Die Schlacke ist somit als hydraulisch aktive Mischzement-Komponente bestens geeignet.

Pro Tonne Müllschlacke konnte außerdem 150 kg Roheisen, entsprechend Hochofen-Eisenqualität, zurückgewonnen werden.

Zusätzlich zu diesen im wesentlichen metallurgischen Prozessen läßt sich der Energieverbrauch durch entsprechende Vorbehandlung weiter minimieren. Mit Vorteil erfolgte eine Vorbehandlung insbesondere von Filterstäuben, die dazu diente, den Chlorid-Eintrag zu minimieren. Chlorid wirkt nämlich außerordentlich negativ auf die Metallurgie, da es zur Schwermetallchloridverflüchtigung und sogar zur Ausbildung einer sogenannten Glasgalle führen kann, die vermutlich aus Calziumchlorid bestehen dürfte. Eine derartige Glasgalle ist von gereinigten Schlackenschmelzen praktisch nicht zu trennen. Chlorid kann sich im Schlackenzement auch überaus negativ auf die Festigkeitsentwicklung sowie auf das Korrosionsverhalten bei Verwendung beispielsweise in Stahlbeton auswirken.

Ein wärmeökonomisch sinnvolles Verfahren umfaßt somit auch eine integrierte Vorwärmung, wofür beispielsweise Schwebeschmelz--Schachtverfahren oder Gegenstrom-Schachtöfen zum Einsatz gelangen können. Der Wärmeübergang kann darüberhinaus durch Eintrag von aufzuarbeitendem Gut in Form von Staub wesentlich verbessert werden und erhöht werden.

Für die Schlackentrocknung in einem Trommeltrockner ist es sinnvoll, den entstehenden Flugstaub ähnlich wie KVA-Filterstäube zu behandeln.

In einem Schwebeschmelz-Schacht kann der Staubeintrag in überaus vorteilhafter Weise in Schmelztröpfchen umgewandelt werden, wobei hier eine Totaloxidation ohne weiteres gelingt. Aufgrund des hohen Verhältnisses zwischen Feststoff- bzw. Schmelzoberfläche zum Gasraum wird ein optimaler Wärmeübergang gewährleistet. Das getrocknete und entstaubte Stückgut kann in einfacher Weise über den Abgasschacht der flüssigen Schlackenschmelze zudosiert werden, wobei die enstehende absinkende Metallschmelze beispielsweise über eine Eintauchlanze oxidiert werden muß, um die gewünschte Oxidation zu gewährleisten. Bei einer Volloxidation verdampft Chlorid quantitativ entweder in Form der Schwermetallchloride, $Cl_2$ oder HCl. Ein zu hoher Chlorideintrag kann im Abgasschacht bzw. im Vorwärmesystem aufgrund von Kondensation zu schwerwiegenden Ansatzproblemen führen. Ein Schwefeleintrag wird quantitativ hauptsächlich zu $SO_2$ verbrannt und kann gleichfalls zu Ansatzproblemen führen. Im Einschmelz-Oxidationsreaktor soll nun an der tiefsten Stelle ein Abstich vorgesehen sein, um eine ggf. gebildete Kupfer-Zinn-Nickel-Legierung abziehen zu können.

Bei dem eingangs geforderten Eisenbad-Reaktor wird die Temperatur in besonders vorteilhafter Weise induktiv aufrechterhalten werden. Dies hat zur Folge, daß dann, wenn eine Wärmezufuhr nicht benötigt wird, das Spulensystem beispielsweise abgesenkt werden kann, wodurch die Verlustleistung aufgrund der Spulenwasserkühlung verringert werden kann. In einem derartigen Eisenbad-Reaktor hat sich die Ausbildung zweier nicht mischbarer, stabiler Metallphasen gezeigt, nämlich eine leichte Eisenphase sowie eine schwere, kupferhältige Phase. Zu Beginn der Eisenbad-Reaktion liegt im gesamten Eisenbad z.B. eine Eisenlegierung vor, welche der Charge von Schrott bzw. Müllschrott entspricht. Derartiger Müllschrott enthält in der Regel Kupfer, beispielsweise im Ausmaß von 0,5 Gew.%. Um eine derartige Schrottlegierung flüssig zu halten, sind Temperaturen von ungefähr 1550° C erforderlich. Mit dem Beginn des Schlackenflusses über dieses Eisenbad wird Kupferoxid aus der Schlacke herausreduziert, wobei gleichzeitig Eisen aus dem Bad zu Eisenoxid oxidiert wird. Das Eisenbad wird entsprechend kupferreicher und Eisenoxid geht in die Schlacke. Wenn das Eisenbad bereits etwa 20 Gew.% Kupfer aufweist, kann die Badtemperatur auf etwa 1480° C abgesenkt werden, ohne daß sich eine feste Metallegierung abscheidet. Bei entsprechend ausreichender Reduktionskraft des Eisenbades für den erforderlichen niedrigen Kupfergehalt der Schlacke wird in der Folge eine Gleichgewichtslage im Eisen-Kupfer-Phasendiagramm erreicht, bei welcher das Metallbad bei 1450° C flüssig ist, ebenso wie die Schlacke. Durch Beenden des Schlackenflusses kann das Eisenbad abgestochen werden und auf eine Temperatur von ungefähr 1100° C abkühlen. Eine Eisenlegierung mit ungefähr 8 % Kupfer scheidet sich in diesem Falle als Deckel ab, die auf einer flüssigen Kupferlegierung mit etwa 4 % Eisengehalt aufschwimmt. Diese Kupferlegierung stellt metallurgisch gesehen eine Rohbronze dar und stellt gleichzeitig ein wertvolles Rohmaterial dar. Der Eisendeckel kann anschließend gemeinsam mit Schrott, um den Eisenverlust auszugleichen, wieder dem Eisenbad zugesetzt werden, wobei jeweils 6 Teile Eisenlegierung mit 5,5 Teilen Kupferlegierung im Gleichgewicht stehen.

Die Rohschlacke weist in der Regel einen Kupfergehalt von ungefähr 1 Gew.% auf, welcher gegen 0 abgereichert werden soll. Entsprechend der erfindungsgemäß vorgeschlagenen Verfahrensweise kann mit einer Tonne Eiseneinsatz ein Entkupfern von 48 Tonnen Schlacken vorgenommen werden.

Falls bei 1500° C auch alles Zinnoxid aus der Schlacke reduziert werden soll, liegt die Abstichkonzentration des Eisenbades bei ungefähr 75 % Eisen.

Direkt über dem Induktionstiegel entsteht aufgrund von Wirbelströmen und aufgrund der Thermik eine gewisse Turbulenz, welche zur Durchmischung von Schlacke mit Eisen führt, was für die Buntmetallreduktion aus der Schlackenschmelze vorteilhaft ist. Diese Tubulenzen können durch induktives Rühren noch weiter verstärkt werden. Die Absetzung reduzierter Buntmetalle erfolgt wiederum in einer laminaren Zone, wobei in jedem Fall eine relativ dünne Schlackenschicht in der laminaren Zone von ausschlaggebender Bedeutung ist, um kurze Absetzwege und -zeiten der reduzierten Buntmetalle zu gewährleisten. Wichtig ist, daß das Eisenbad hier nirgends mit Kohlenstoff in Berührung kommt, da sich im Gleichgewicht mit Kohlenstoff sehr hochschmelzender Zementit ausbilden würde und unweigerlich eine extreme Viskositätserhöhung des Eisenbades erfolgen würde, welche das Sedimentieren der Buntmetalle sehr stark verzögert, wenn nicht sogar unmöglich macht. Die atmosphilen Schwermetalle Zink und Blei verlassen das Schlackenbad über den Gasweg und können über einen Kamin ausgetragen, kondensiert oder verbrannt werden. Die abgereicherte Schlackenschmelze kann über eine Gasgranulations- oder eine Dampfgranulationsmühle zu hydraulisch und puzzolanisch aktiven Materialien gekühlt werden.

Beispiel 2:

Kupferschlacke, welche aus Konverterschlakke beim Perce Smith-Oxidationsverfahren entsteht, fällt bei 1350° C flüssig an und hatte die folgende Zusammensetzung:

| Hauptkomponente | Anteil (%) |
|---|---|
| $SiO_2$ | 27,8 |
| $Al_2O_3$ | 5,7 |
| $Fe_2O_3$ | 50,3 |
| $CaO$ | 3,8 |
| $MgO$ | 2,2 |

| Nebenkomponente | Anteil (%) |
|---|---|
| $SO_3$ | 0,50 |
| $K_2O$ | 0,13 |
| $Na_2O$ | 0,64 |
| $TiO_2$ | 0,36 |

(fortgesetzt)

| Nebenkomponente | Anteil (%) |
|---|---|
| $Mn_2O_3$ | 0,35 |
| $P_2O_5$ | 0,27 |

| Buntmetall | Anteil (ppm) | TVA-Grenzwert (ppm) |
|---|---|---|
| Cu | 11 000 | 500 |
| Pb | 12 000 | 500 |
| Zn | 36 000 | 1 000 |

Die Analyse zeigte somit einen hohen Eisenoxidgehalt sowie Schwermetallgehalte, die diese Schlacke nur auf eine Sondermüll-Deponie absetzbar machen läßt. Mit Hilfe des erfindungsgemäßen Verfahrens wird diese Kupferschlacke umgewandelt in

a) hochwertiges Puzzolan als Mischzementkomponente
b) sogenanntes "Blister-Kupfer"
c) ein Zink/Blei-Mischmetall
d) hochwertiges Gußeisen

Das erfindungsgemäße Verfahren ist somit in der Lage, das gesamte Wertschöpfungspotential der Kupferverhüttung anzuheben. Außerdem wird ein entsorgungstechnisches Problem, nämlich die Deponie, vermieden.

Die flüssige Kupferschlacke wurde der oxidierend beheizten Warmhaltepfanne, das heißt einem Schmelz-Oxidationsreaktor, zugeführt. Die Beheizung erfolgte durch einen Erdgas/Luftbrenner. Die Luft kann dabei mit Sauerstoff angereichert oder ersetzt werden. Dabei wurde das Schmelzgut auf 1500° C erhitzt und anschließend dem induktiv beheizten Eisenbad-Reaktor zugeführt. Hier erfolgte in der bereits beschriebenen Art die Schwermetallabreicherung; das Rohrkupfer (~ 4 % Fe) wird zur Eisenverbrennung der oxidierend betriebenen Warmhaltepfanne zugeführt und dort als Blisterkupfer gewonnen. Zn und Pb verdampfen.

Die an Schwermetall abgereicherte Schlacke wies nach wie vor hohen Eisenoxidanteil auf und wurde dem bereits bekannten Eisenbad-Kalzinator zugeführt. Dort wurde das Eisenoxid mittels $C/O_2/CaCO_3$ reduziert und als Roheisen abgezogen. Die Schlacke wurde mit Hilfe eines Luftgranulators als glasiges Gut (Puzzolan) erhalten.

Das Puzzolan hatte die folgende Zusammensetzung:

| Komponente | Anteil (%) |
|---|---|
| $SiO_2$ | 64 |
| $Al_2O_3$ | 13 |
| $Fe_2O_3$ | 4 |

(fortgesetzt)

| Komponente | Anteil (%) |
| --- | --- |
| Ca0 | 12 |
| Mg0 | 5 |

Das Produkt wurde praktisch mit 98 % Glasgehalt erhalten und wies hervorragende puzzolanische Eigenschaften nach ASM C109 mit SAI = 112 % auf (insbesondere signifikante Erhöhung der 28-Tagefestigkeit des Mischzements).

Die Erfindung wird nachfolgend anhand eines in der Zeichnung schematisch dargestellten Ausführungsbeispieles einer erfindungsgemäßen Vorrichtung nochmals näher erläutert.

In der Zeichnung ist ein Schwebeschmelz-Schacht 1 ersichtlich, welcher ebenso wie der Abgasschacht 2 über einem Schmelzoxidation-Reaktor 3 angeordnet ist. In den Schwebeschmelz-Schacht 1 kann Staub eingetragen werden, wobei hier auch Brennstoff und ggf. Shreddermüll eingespeist werden kann. In den abgasschacht 2 wird Stückgut eingebracht, welches zuvor in einem Trommeltrockner erwärmt werden kann. Aus dem Schmelzoxidationsreaktor 3, in welchem eine Eisen-, Aluminium- und Kohlenstoffoxidation vorgenommen wird, gelangt die Schlacke in einen Eisenbad-Reaktor 4, an welchen ein beheizter Badaustrag 5 angeschlossen ist. Der Badaustrag 5 ist mit Induktionsheizung und einer verfahrbaren Induktionsspule ausgestattet, um dann, wenn eine Erwärmung nicht erforderlich ist, die Verlustleistung zu minimieren. Der in den Schwebeschmelz-Schacht 1 eingebrachte Staubanteil kann beispielsweise aus einem Entstaubungszyklon 6 stammen. Filterstaub aus Müllverbrennungsanlagen sollte einer Chloridwäsche unterworfen werden, bevor derartiger Staub in den Schwebeschmelz-Schacht 1 eingetragen wird.

Die gewünschte Oxidation im Schmelzoxidationsreaktor 3 wird durch Einblasen von Sauerstoff über die Lanze 7 in das Schlackenbad sichergestellt. Im Überströmbereich zwischen dem Einschmelz-Oxidationsreaktor 3 und dem Eisenbad-Reaktor 4 befindet sich eine turbulente Zone 8 oberhalb des beheizten Austrages 5, in welchem eine besonders intensive Schlackenreaktion vorgenommen wird. In Strömungsrichtung der Schlacke im Eisenbad-Reaktor 4 nachfolgend, bildet sich eine laminare Zone 9 aus, in welcher die Absetzung von Buntmetallen begünstigt wird. Die Schlacke gelangt in der Folge in einen Eisenbad-Kalzinator 10. In diesem Eisenbad-Kalzinator 10 wird über eine Lanze 11 Calziumcarbonat, Calziumoxid, Kohlenstoff und ggf. Sauerstoff in das unter der Schlacke befindliche Metallbad eingetragen. Das Metallbad kann als Roheisen wieder abgezogen werden. Zink und Blei kann in Dampfform aus dem Eisenbad-Reaktor 4 abgezogen werden. Das C0/C0$_2$-Gemisch mit entsprechender verringerter Reduktion kann aus dem Eisenbad-Kalzinator 10 abgezogen und dem Eisenbad-Reaktor 4 rückgeführt werden.

Die Schlacke schließlich kann aus dem Eisenbad-Kalzinator 10 ausgetragen und einer Dampfgranuliermühle zugeführt werden, welcher Preßluft und Druckwasser zugeführt wird. Das Produkt dieser Dampfgranuliermühle ist eine synthetische Hochofenschlacke mit hervorragenden hydraulischen Eigenschaften, wobei das bei der Granulation entstehende Heißgas einem Trockner rückgeführt werden kann.

Das aus dem Metallaustrag 5 aus dem Eisenbad-Reaktor 4 ausgetragene Metall wird einer Seigerungskokille 12 zugeführt, auf welcher unter einem Eisendeckel Rohbronze ausseigert. Diese Rohbronze kann dem Schmelzoxidationsreaktor 3 rückgeführt werden, wobei vorzugsweise in diesem Falle die Oxidation so eingestellt wird, daß Buntmetalle bzw. edlere Metalle als Eisen nicht mehr oxidiert werden, sodaß unmittelbar eine Metallphase bestehend aus Bronze aus dem Schmelzoxidationsreaktor 3 abgezogen werden kann.

Insgesamt ist der Gesamtprozeß exotherm und kann damit vorteilhaft zur Energiegewinnung herangezogen werden.

## Patentansprüche

1. Verfahren zum Aufarbeiten von Müll oder von metalloxidhaltigen Müllverbrennungsrückständen oder Schlacken, insbesondere von Altkatalysatoren, Autoshredderleichtfraktionen, Schrottmetallen, Galvanik-Rückständen und/oder Klärschlamm, bei welchem die getrockneten und vorgewärmten Feststoffe einem Einschmelzoxidations-Reaktor zugeführt werden, dadurch gekennzeichnet, daß nach einer zumindest teilweisen Oxidation der Schmelze zu Schlacke unter Abscheidung eines Metallbades die Schlacke zweistufig reduziert wird, wobei in einer ersten Stufe mit Schrott oder durch Einblasen von CO/CO$_2$ eine Buntmetallreduktion unter Ausbildung eines Eisenbades, aus welchem Buntmetalle in Form von Rohbronze ausseigern, durchgeführt wird und in der zweiten Reduktionsstufe mit CaCO$_3$, CaO und Kohlenstoff, sowie ggf. O$_2$, eine indirekte Eisenreduktion zur Verringerung des FeO-Gehaltes der Schlacke vorgenommen wird.

2. Verfahren nach Anspruch 1, dadurch gekennzeichnet, daß das in der zweiten Reduktionsstufe gebildete CO/CO$_2$-Gemisch zur Verringerung des Reduktionspotentiales mit O$_2$ teilverbrannt wird und in die erste Reduktionsstufe zur Cu-Reduktion eingebracht wird.

3. Verfahren nach Anspruch 1 oder 2, dadurch gekennzeichnet, daß das CaCO$_3$, CaO und C sowie ggf. O$_2$ über eine Lanze in ein unter dem Schlackenbad befindliches Fe-Bad eingeblasen wird.

4.  Verfahren nach Anspruch 1, 2 oder 3, dadurch gekennzeichnet, daß in der zweiten Reduktionsstufe Schlackeneisenoxid zum Frischen des Eisenbades verwendet wird.

5.  Verfahren nach einem der Ansprüche 1 bis 4, dadurch gekennzeichnet, daß die Buntmetallverunreinigungen aus dem in die erste Reduktionsstufe in Form von Schrott eingebrachten Fe in der ersten Reduktionsstufe zur Gänze ausgeseigert werden.

6.  Verfahren nach einem der Ansprüche 1 bis 5, dadurch gekennzeichnet, daß aus der ersten Reduktionsstufe eine flüssige Cu-Legierung ausgeseigert wird, welche neben Cu weitere siderophile Schwermetalle wie Sn und Ni ausseigert und dem Einschmelzoxidations-Reaktor rückgeführt wird.

7.  Verfahren nach einem der Ansprüche 1 bis 6, dadurch gekennzeichnet, daß das Oxidationspotential im Einschmelzoxidations-Reaktor so eingestellt wird, daß die Verbrennung bis zum Fe unter Ausschluß der edleren Metalle wie Cu geführt wird, wobei Cu als Schmelze abgezogen wird.

8.  Vorrichtung zur Durchführung der Verfahren nach einem der Ansprüche 1 bis 7 mit einem Einschmelz-Oxidationsreaktor (3), welchem ein Eisenbad-Reaktor (4) und ein Eisenbad-Kalzinator (10) nachgeschaltet sind, welche über Überströmkanäle für die Schlackenphase miteinander verbunden sind, wobei an den Eisenbad-Reaktor (4) Mittel zur Aufgabe von Schrott und/oder zum Einblasen von $CO/CO_2$ und eine Austragsöffnung (5) für den Austrag von Buntmetallen bzw. Buntmetallegierungen und an den Eisenbad-Kalzinator (10) Mittel für den Eintrag von $CaCO_3$, CaO, Kohlenstoff sowie gegebenenfalls $O_2$, insbesondere eine Lanze (11), angeschlossen sind, wobei im Eisenbad-Kalzinator (10) der FeO-Gehalt der Schlacke verringert wird und eine Abstichöffnung für Roheisen angeschlossen ist, dadurch gekennzeichnet, daß an den Eisenbadreaktor (4) eine mit einem Eisendeckel betriebene Seigerungskokille angeschlossen ist.

**Claims**

1.  A method for processing waste or metal-oxide-containing waste incineration residues or slags, in particular used catalysts, car shredder light fractions, scrap metals, galvanic residues and/or sewage sludge, in which the dried and preheated solids are supplied to a meltdown oxidation reactor, characterized in that the slag is reduced in two stages after an at least partial oxidation of the melt to slag at the simultaneous separation of a metal bath, whereby, in a first stage, a nonferrous heavy metal reduction is carried out by the aid of scrap or by blowing in $CO/CO_2$, with an iron bath forming from which nonferrous heavy metals are separated by liquation in the form of raw bronze, and that, in the second reduction stage, an indirect iron reduction is carried out by the aid of $CaCO_3$, CaO and carbon as well as optionally $O_2$ in order to reduce the FeO content of the slag.

2.  A method according to claim 1, characterized in that the $CO/CO_2$ mixture formed in the second reduction stage is partially burned with $O_2$ in order to lower the reduction potential and charged into the first reduction stage for the reduction of Cu.

3.  A method according to claim 1 or 2, characterized in that the $CaCO_3$, CaO and C as well as optionally $O_2$ are blown into an iron bath present below the slag bath via a lance.

4.  A method according to claim 1, 2 or 3, characterized in that the iron oxide of the slag is used in the second reduction stage for the refining of the iron bath.

5.  A method according to any one of claims 1 to 4, characterized in that the nonferrous heavy-metal impurities from the iron charged into the first reduction stage in the form of scrap are completely liquated in the first reduction stage.

6.  A method according to any one of claims 1 to 5, characterized in that from the first reduction stage a liquid copper alloy is separated by liquation, which, in addition to Cu, liquates also other siderophilic heavy metals such as Sn and Ni and is recycled to the meltdown oxidation reactor.

7.  A method according to any one of claims 1 to 6, characterized in that the oxidation potential within the meltdown oxidation reactor is adjusted such that the combustion is effected up to Fe excluding the nobler metals such as Cu, Cu being drawn off as a melt.

8.  A device for carrying out the method according to any one of claims 1 to 7, comprising a meltdown oxidation reactor (3) followed by an iron bath reactor (4) and an iron bath calciner (10) which are connected with each other via overflow channels for the slag phase, wherein a means for charging scrap and/or blowing in $CO/CO_2$ and a discharge opening (5) for discharging nonferrous heavy metals and nonferrous heavy metal alloys is connected to the iron bath reactor (4) and a means for charging $CaCO_3$, CaO and carbon as well as optionally $O_2$, in particular a lance, is connected to the iron bath calciner (10), the FeO content of the slag being reduced in, and a tap opening for pig iron being connected to, the iron bath calciner (10), characterized in that a liquation mold operated by an iron lid is connected to the iron bath reactor (4).

## Revendications

**1.** Procédé de retraitement d'ordures ou de résidus d'incinération d'ordures renfermant des oxydes de métaux ou de scories, notamment de vieux pots catalytiques, de fractions légères de shredders de carrosseries, de ferrailles, de résidus de galvanisation et/ou de boues de curage, d'après lequel les substances solides séchées et préchauffées sont amenées à un réacteur de fusion et d'oxydation, caractérisé en ce qu'après une oxydation, au moins partielle, du bain de fusion en laitier, on effectue, avec séparation d'un bain de métal, une réduction du laitier sur deux étages, à savoir que dans un premier étage, avec des ferrailles ou par soufflage de $CO/CO_2$, on réalise une réduction de métaux lourds non ferreux avec formation d'un bain de fer, duquel ressuent des métaux lourds non ferreux sous la forme de bronze brut, et dans le deuxième étage de réduction, on effectue, avec du $CaCO_3$, du $CaO$ et du carbone, ainsi que le cas échéant de l'$O_2$, une réduction de fer indirecte pour abaisser la teneur en $FeO$ du laitier.

**2.** Procédé selon la revendication 1, caractérisé en ce que le mélange $CO/CO_2$, produit dans le deuxième étage de réduction, est soumis à une combustion partielle avec de l'$O_2$ pour abaisser le potentiel de réduction, et est envoyé dans le premier étage de réduction pour la réduction de Cu.

**3.** Procédé selon la revendication 1 ou 2, caractérisé en ce que le $CaCO_3$, le $CaO$ et le C, ainsi que le cas échéant l'$O_2$, sont soufflés, par l'intermédiaire d'une lance, dans un bain de Fe se trouvant sous le bain de laitier.

**4.** Procédé selon la revendication 1, 2 ou 3, caractérisé en ce que dans le deuxième étage de réduction on utilise de l'oxyde de fer de laitier pour affiner le bain de fer.

**5.** Procédé selon l'une des revendications 1 à 4, caractérisé en ce que les impuretés de métaux lourds non ferreux sont extraites en totalité par ressuage, dans le premier étage de réduction, du Fe introduit sous forme de ferrailles dans le premier étage de réduction.

**6.** Procédé selon l'une des revendications 1 à 5, caractérisé en ce que l'on extrait par ressuage du premier étage de réduction, un alliage liquide de Cu, qui en dehors du Cu ressue d'autres métaux lourds sidérophiles, tels que le Sn et le Ni, et qui est recyclé dans le réacteur de fusion et d'oxydation.

**7.** Procédé selon l'une des revendications 1 à 6, caractérisé en ce que le potentiel d'oxydation dans le réacteur de fusion et d'oxydation est réglé de façon telle, que la combustion soit conduite jusqu'au Fe exclusion faite des métaux plus nobles tels que le Cu, le Cu étant extrait sous forme de bain en fusion.

**8.** Dispositif pour la mise en oeuvre des procédés selon l'une des revendications 1 à 7, comprenant un réacteur de fusion et d'oxydation (3) auquel succèdent un réacteur de bain de fer (4) et un réacteur de calcination de bain de fer (10), qui sont mutuellement reliés par des canaux de passage pour la phase de laitier, des moyens étant raccordés au réacteur de bain de fer (4) pour le chargement de ferrailles et/ou pour le soufflage de $CO/CO_2$, et une ouverture d'extraction (5) pour l'extraction de métaux lourds non ferreux et d'alliages de métaux lourds non ferreux, et des moyens, notamment une lance (11), étant raccordés au réacteur de calcination de bain de fer (10) pour l'introduction de $CaCO_3$, de $CaO$, de carbone ainsi que le cas échéant de $O_2$, la teneur en $FeO$ du laitier étant abaissée dans le réacteur de calcination de bain de fer (10) auquel est raccordée une ouverture de coulée pour la fonte, caractérisé en ce qu'au réacteur de bain de fer (4) est raccordée une coquille de ressuage fonctionnant avec un couvercle de fer.

WASSER
KVA-FILTERSTAUB
VORFLUTER
CoCl$_2$-LÖSUNG
CHLORID-WASCHE
SCHLAMM (Chlorfrei)
TROCKNER
Brennkammer
CaCO$_3$+CaO+C+O$_2$
HEISSGAS
SYNTHETISCHE HOCHOFENSCHLACKE
DGM
11
Roheisen
CO
10
9
PRESSLUFT
DRUCKWASSER
Eisendeckel
Schrott-Zugabe
KVA-SCHLACKE
ABGAS
6
evtl. Bypass
Brennstoff (evtl. Schreddermüll)
SAUERSTOFF
Zn/Pb-Dampf
Schrott
4
8
5
Metallbad
12
BRONZE (Cu,Sn,Ni)
Rohbronze (Cu,Fe,Sn,Ni)
Staub-Eintrag
7
1
3
2
TROMMELTROCKNER
Stückgut-Möllerung
WARM-GAS